# EUROPÄISCHE PATENTSCHRIFT

(11) **EP 3 147 240 B1**
(45) Veröffentlichungstag und Bekanntmachung des Hinweises auf die Patenterteilung: **13.06.2018**
(21) Anmeldenummer: 16187258.5
(22) Anmeldetag: 05.09.2016
(51) Int. Cl.: B65G 17/20, B65G 19/02, B65G 9/00

(54) **TRANSPORTTASCHE FÜR DEN TRANSPORT UND/ODER DIE AUFBEWAHRUNG VON GEGENSTÄNDEN SOWIE TRANSPORTVORRICHTUNG MIT EINER SOLCHEN TRANSPORTTASCHE**
TRANSPORT BAG FOR TRANSPORTING AND/OR STORAGE OF OBJECTS AND TRANSPORT DEVICE COMPRISING SUCH A TRANSPORT BAG
SAC DE TRANSPORT POUR LE TRANSPORT ET/OU LE RANGEMENT D'OBJETS ET DISPOSITIF DE TRANSPORT COMPRENANT UN TEL SAC DE TRANSPORT

(30) Priorität: 24.09.2015 CH 13862015
(43) Veröffentlichungstag der Anmeldung: 29.03.2017
(73) Patentinhaber: Ferag AG, 8340 Hinwil (CH)
(72) Erfinder: Auf der Maur, Konrad, 8625 Gossau (CH)
(74) Vertreter: Rentsch Partner AG

(56) Entgegenhaltungen:
- DE-A1- 10 354 419
- DE-A1-102004 018 569
- DE-A1-102013 205 170
- US-A- 2 078 438
- US-A- 4 140 163

## Beschreibung

### TECHNISCHES GEBIET

Die vorliegende Erfindung bezieht sich auf das Gebiet der Transporttechnik. Sie betrifft eine Transporttasche gemäss dem Oberbegriff des Anspruchs 1. Sie betrifft weiterhin eine Transportvorrichtung mit einer solchen Tasche.

### STAND DER TECHNIK

In automatisierten Warenlagern, weitläufigen Produktionsstätten und beim Warentransport ganz allgemein besteht der Bedarf, Fördergüter oder Waren in geeignete Fördergutbehälter, insbesondere Transporttaschen, aufzunehmen, diese dann zum Beispiel über eine Hängefördereinrichtung zu ihrem Bestimmungsort zu transportieren und dort wieder zu entladen. Dazu sind in der Vergangenheit diverse Fördergutbehälter bzw. Transporttaschen und dazugehörige Hängefördereinrichtungen bzw. Transportvorrichtungen entwickelt und beschrieben worden.

Die Druckschrift DE 10 2012 212 518 A1 offenbart einen Fördergutbehälter zum Transport von Fördergut in einer Hängefördereinrichtung, wobei der Fördergutbehälter als Hängetasche mit zwei, einen Fördergutaufnahmebereich zwischen sich begrenzenden, vermittels einer Klappscharnieranordnung miteinander verbundenen und zum Öffnen und Schliessen der Hängetasche um eine Klappachse klappbaren Seitenwandelementen und mit einem Anhängmittel zum Anhängen an eine Hängefördereinrichtung ausgebildet ist, dadurch gekennzeichnet, dass wenigstens ein erstes der beiden Seitenwandelemente einen Rahmen und ein von dem Rahmen gehaltenes Fördergutlagefixierelement aufweist, welches dazu bestimmt und eingerichtet ist,; bei geschlossener und mit Fördergut beladener Hängetasche eine dem Verrutschen des Fördergutes in seiner Position in der Hängetasche entgegenwirkende Kraft auf das Fördergut auszuüben oder/und dem Verrutschen des Fördergutes in seiner Position in der Hängetasche entgegenwirkende mehrseitige Barriere zu bilden.

Dokument DE 10 2011 101 987 A1 beschreibt eine Transporttasche zur Beförderung eines Fördergutes in einer Förderanlage, insbesondere einer Hängeförderanlage, mit einem Trägerteil, das zur Aufnahme an einem Förderstrang der Förderanlage ausgebildet ist, mit einem Ladehilfsmittel zur Aufnahme des Fördergutes, wobei das Ladehilfsmittel eine Verschlussklappe aufweist, die eine Handhabungslasche mit einem Klemmabschnitt aufweist, wobei das Trägerteil eine Klemmeinrichtung mit einem Klemmhebel aufweist, der zwischen einer Haltestellung, in der eine Haltekraft auf den Klemmabschnitt einwirkt, und einer Freigabestellung verlagerbar ist, und wobei der Klemmhebel in der Haltestellung derart mit dem Klemmabschnitt gekoppelt ist, dass das aufgenommene Fördergut durch sein Gewicht eine Erhöhung der Haltekraft bewirkt.

Dokument DE 10 2004 018 569 A1 offenbart eine Sammeleinrichtung zum Aufnehmen von Objekten, insbesondere von Kleidungsstücken, beim sortierenden Sammeln der Objekte, gekennzeichnet durch eine Sammeltasche, die im Wesentlichen ein mit einem in eine Fördervorrichtung integrierbaren Mitnahmeelement versehenes Rahmengestell und einen am Rahmengestell hängenden Taschenbeutel aufweist, wobei das Mitnahmeelement und das Rahmengestell relativ zueinander um eine quer zur Förderrichtung liegende Achse schwenkbar sind, und wobei bei horizontaler Anordnung des Rahmengestells der Taschenbeutel geöffnet und bei vertikaler Anordnung des Rahmengestells der Taschenbeutel zusammengefallen und im Wesentlichen geschlossen ist.

Dokument DE 20 2012 012 331 U1 beschreibt einen Fördergutbehälter zum Transport von Fördergut in einer Hängefördereinrichtung, wobei der Fördergutbehälter als Hängetasche mit einem Fördergutaufnahmebereich, der an einer Seite von einem Seitenwandelement begrenzt ist, und mit einem Anhängmittel zum Anhängen an eine Hängefördereinrichtung ausgebildet ist, wobei das Anhängmittel um eine Schwenkachse definierende Schwenkeinrichtung schwenkbar an dem Seitenwandelement befestigt ist, dadurch gekennzeichnet, dass der Fördergutaufnahmebereich an einer weiteren Seite von einem Fördergutlagefixierelement begrenzt ist, wobei das Fördergutlagefixierelement mit dem Anhängmittel verbunden ist, derart, dass das Fördergutlagefixierelement beim Schwenken des Anhängmittels relativ zu dem Seitenwandelement aus einer Transportstellung in eine Öffnungsstellung von dem Seitenwandelement entfernbar ist, sodass sich der Fördergutaufnahmebereich öffnet.

Dokument US 8,490,774 B2 offenbart eine Ladestation für Transporttaschen, die in einem Hängefördersystem transportiert werden, welche Ladestation eine obere Zufuhrschiene für die Transporttaschen umfasst, sowie einen Senkrechtförderer, der an die Zufuhrschiene zum Bewegen der Transportbeutel in eine untere Ladeposition anschliesst, eine Einrichtung zum Öffnen der Transporttaschen in der Ladeposition, und eine untere Ausgabeschiene, die an den Vertikalförderer zum Entladen der Transportbeutel aus der Ladeposition anschliesst.

Dokument EP 2 708 478 A1 beschreibt eine Tragetasche für eine Hängefördervorrichtung für den hängenden Transport von Objekten, aufweisend einen Halterahmen, einen Taschenbeutel, der am Halterahmen hängt und von dem zu transportierende Objekte aufnehmbar sind, und ein Aufhängeelement, welches mit dem Halterahmen verbunden ist und mittels dessen die Tragetasche an die Hängefördervorrichtung anhängbar ist, um von der Hängefördervorrichtung hängend transportiert zu werden, dadurch gekennzeichnet, dass der Taschenbeutel einen ersten und einen zweiten Beutelabschnitt aufweist, die jeweils einen mit dem Halterahmen verbundenen, ersten Beutelendabschnitt und einen vom Halterahmen abgewandten, zweiten Beutelendabschnitt aufweisen, wobei die zweiten Beutelendabschnitte über einen Gelenkmechanismus miteinander verbunden sind, welcher in eine Entladestellung bringbar ist, in welcher die zweiten Beutelendabschnitte in einem Abstand voneinander angeordnet sind, sodass der Taschenbeutel zur Abgabe von Objekten mit einer zwischen den zweiten Beutelendabschnitten gebildeten Auslassöffnung ist, und welcher in eine Beladestellung bringbar ist, in welcher die zweiten Beutelendabschnitte zueinander benachbart angeordnet sind, sodass die Auslassöffnung geschlossen ist und der Taschenbeutel Objekte aufnehmen kann. Die DE102013205170A1 offenbart eine Transporttasche nach dem Oberbegriff des Anspruchs 1. Eine in der DE102013205170A1 offenbarte Beladestation dient zum Beladen von Transporttaschen zum hängenden Transport von Waren. Die Transporttaschen haben jeweils eine erste Taschenwand, die in ihrem in Transportstellung oberen Abschnitt mit einem Tragelement zum hängenden Transport der Transporttasche verbunden ist. Eine zweite Taschenwand der Transporttasche bildet mit der ersten Taschenwand eine zumindest in der Transportstellung der Transporttasche nach unten und zu zwei gegenüberliegenden Seiten hin geschlossene Tasche. Eine Kupplung der Transporttasche dient zum lösbaren Verbinden der beiden Taschenwände in einem in der hängenden Transportstellung der Transporttasche oberen Wand-Verbindungsabschnitt oder in einem unteren Wand-Verbindungsabschnitt. Die Beladestation hat mindestens ein Fördertrum zum Fördern der Transporttaschen.
Üblicherweise sind die bisher vorgeschlagenen Transporttaschen so ausgestaltet, dass sie entweder starr und dauerhaft offen sind, oder sich selbsttätig schliessen, sobald sie gefüllt werden oder sich nach der Schwerkraft ausrichten.

Dies hat zur Folge, dass die Transporttaschen sich entweder beim Nichtgebrauch nicht platzsparend zusammendrücken lassen, oder beim Be- und Entladen mit viel Aufwand offen gehalten werden müssen.

### DARSTELLUNG DER ERFINDUNG

Es ist daher eine Aufgabe der Erfindung, eine Transporttasche zu schaffen, die selbsttätig in den offenen Zustand übergeht und dort verbleibt, sich aber gleichzeitig bei Nichtgebrauch platzsparend zusammenfalten lässt.

Es ist weiterhin Aufgabe der Erfindung, eine Transportvorrichtung mit einer solchen Tasche anzugeben.

Diese Aufgaben werden durch die Merkmale der Ansprüche 1 und 16 gelöst.

Die erfindungsgemässe Transporttasche für den Transport und/oder die Aufbewahrung von Gegenständen umfasst eine Vorderwand und eine Rückwand, die über einen Bodenabschnitt derart flexibel miteinander verbunden sind, dass sie zwischen einer ersten Konfiguration, in welcher sie eine oben offene und von oben befüllbare Tasche bilden, und einer zweiten Konfiguration, in welcher sie dicht nebeneinander liegen und eine zusammengefaltete Tasche bilden, hin und her bewegbar sind, wobei die Rückwand nach oben über die Höhe der Vorderwand hinaus mit einem Tragabschnitt zum Befestigen der Transporttasche an einer Transportvorrichtung, an welcher sie hängend entlang einem Transportweg bewegbar ist, verlängert ist.

Dabei sind Öffnungsmittel vorgesehen, welche die Transporttasche selbsttätig in die erste Konfiguration bringen und dort halten, und einen gewollten Wechsel von der ersten in die zweite Konfiguration zulassen.

Weiterhin umfassen die Öffnungsmittel einen Öffnungsbügel, welcher die Rückwand und die Vorderwand miteinander verbindet und jeweils an der Rückwand und an der Vorderwand derart verschwenkbar gelagert ist, dass er, von der zweiten Konfiguration ausgehend, durch sein Eigengewicht von einer schräg angestellten zweiten Position in eine weniger schräg angestellte erste Position verschwenkt wird und dabei die Transporttasche in die erste Konfiguration bringt und dort hält.

Der Öffnungsbügel kann dabei aussen um die Transporttasche herum geführt und an der Aussenseite der Rückwand und an der Aussenseite der Vorderwand jeweils in einer quer liegenden Tunnelschlaufe verschwenkbar gelagert sein.

Der Öffnungsbügel kann als rechteckiger, formstabiler Metallbügel ausgebildet sein. Der Metallbügel muss dabei ausreichend schwer sein, um durch das Eigengewicht aufgrund der Schwerkraft die selbsttätige Öffnungsfunktion sicher zu erfüllen. Die Formstabilität des Öffnungsbügels stellt sicher, dass die Vorder- und Rückwand der Transporttasche sich nicht seitlich gegeneinander verschieben, sondern nur aufeinander zu bzw. voneinander weg bewegt werden können.

Ein runder Querschnitt des Metallbügels kann mit Vorteil die Beweglichkeit des Öffnungsbügels in den Tunnelschlaufen erhöhen.

Der Öffnungsbügel kann in den Tunnelschlaufen vertikal beweglich gelagert sein. Damit kann sich die Bewegung des Bügels leichter an unterschiedliche Füllzustände der Transportasche anpassen.

Insbesondere kann eine der Tunnelschlaufen um eine horizontale Achse umklappbar ausgebildet sein, um dem Öffnungsbügel eine zusätzliche Bewegungsfreiheit zu ermöglichen.

Gemäss einer anderen Ausgestaltung der Erfindung ist die Transporttasche durch Seitenwände seitlich geschlossen und weist als Bodenabschnitt einen Boden auf. Gemäss einer weiteren Ausgestaltung der Erfindung die Transporttasche nach unten geöffnet werden, wobei Mittel zum Verschliessen dieser Öffnung vorgesehen sind. Gemäss einer anderen Ausgestaltung der Erfindung ist die Transporttasche durch Seitenwände seitlich geschlossen und weist als Bodenabschnitt einen Boden auf, wobei der Boden der Transporttasche nach unten aufklappbar ausgebildet ist, und wobei eine oder mehrere Verschlusslaschen vorgesehen sind, mit welchen der Boden im geschlossenen Zustand fixiert werden kann. Insbesondere kann der Boden an der unteren Kante der Vorderseite verschwenkbar angelenkt sein. Die Verschlusslaschen, die mit Vorteil als Klettverschluss ausgebildet sein können, sind insbesondere an der freien Längskante des Bodens angebracht und werden zum Verschliessen von aussen gegen die Rückwand geklappt. Die Verschlusslaschen können aber auch an der unteren Kante der Rückwand angebracht sein und werden dann zum Verschliessen von unten gegen den Boden geklappt.

Alternativ dazu kann die Transporttasche aber auch durch eine seitlich offene Schlaufe gebildet werden, die im unteren Bereich einen Bodenabschnitt ausbildet.

Hierbei können im Bereich oberhalb des Öffnungsbügels auf gegenüberliegenden Seiten Haltebänder vorgesehen sein, welche Vorder- und Rückwand der Schlaufe verbinden und die Schwenkbewegung des Öffnungsbügels begrenzen.

Gemäss einer weiteren Ausgestaltung der Erfindung weist die Transporttasche auf der Vorderwand und/oder der Rückwand eine schützende, insbesondere stossdämpfende, Deckschicht auf. Hierdurch werden in der Tasche transportierte Gegenstände gegen Stösse geschützt, wenn mehrere Transporttaschen in einer schienengebundenen Transportvorrichtung aufeinanderprallen. Die Deckschichten können zusätzlich auch schalldämmend wirken.

Gemäss einer anderen Ausgestaltung der Erfindung ist die Transporttasche mit einem von aussen lesbaren Informationsträger ausgestattet ist. Hierbei kann es sich z.B. um einen optisch lesbaren Informationsträger wie ein Label mit Strichcode oder QR-Code handeln, oder um einen drahtlos elektronisch auslesbaren Informationsträger wie ein RFID. Ist der Träger ein- und auslesbar, können Informationen über den transportierten Tascheninhalt auf ihm gespeichert werden.

Gemäss einer wieder anderen Ausgestaltung der Erfindung ist der Tragabschnitt der Transporttasche mit wenigstens einer Befestigungsöffnung versehen. Diese Befestigungsöffnung kann dazu dienen, die Transporttasche stationär oder an einer Transportvorrichtung (einem Laufwagen) abnehmbar aufzuhängen oder festzuschrauben.

Als Befestigungsöffnungen können zwei auf gleicher Höhe liegende, voneinander beabstandete Ösen vorgesehen sein. Wird die Tasche mit Hilfe der beiden Ösen befestigt, bleibt sie auch in einer Transportvorrichtung lagestabil.

Gemäss einer noch anderen Ausgestaltung der Erfindung ist die Transporttasche aus einem flexiblen, insbesondere gewebeverstärkten, Material gefertigt. Hier kommt beispielsweise ein aussen glattes, kunststoffbeschichtetes Gewebe infrage, wie es in unterschiedlicher Dicke beispielsweise als LKW-Plane eingesetzt wird. Es ist aber auch denkbar, unbeschichtetes Gewebe oder ein Geflecht oder eine Folie als Taschenmaterial einzusetzen.

Die erfindungsgemässe Transportvorrichtung mit einer oder mehreren Transporttaschen nach der Erfindung ist dadurch gekennzeichnet, dass die Transporttasche(n) mit dem Tragabschnitt an einem Laufwagen in einer Laufschiene oder an einer Transportkette hängend entlang einem Transportweg bewegbar ist (sind).

Gemäss einer Ausgestaltung der Transportvorrichtung nach der Erfindung ist die Transporttasche jeweils an wenigstens zwei horizontal voneinander beabstandeten Punkten am Laufwagen bzw. an der Transportkette befestigt.

Die Transporttasche kann dabei an den wenigstens zwei horizontal voneinander beabstandeten Punkten über eine Befestigungsvorrichtung am Laufwagen bzw. an der Transportkette abnehmbar befestigt sein.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in zwei Seitenansichten (a) und (b) ein Ausführungsbeispiel einer Transport-vorrichtung nach der Erfindung mit einem in einer Laufschiene geführten Laufwagen, an welchem über eine Befestigungsvorrichtung eine Transportta-sche gemäss einem Ausführungsbeispiel der Erfindung per Verschraubung befestigt ist;
- Fig. 2: in zwei Seitenansichten (a) und (b) ein anderes Ausführungsbeispiel einer Transportvorrichtung nach der Erfindung mit einem in einer Laufschiene ge-führten Laufwagen, an welchem über eine Befestigungsvorrichtung eine Transporttasche gemäss einem Ausführungsbeispiel der Erfindung abnehm-bar eingehängt ist;
- Fig. 3: in einer Seitenansicht verschiedene Stufen der Öffnung einer Transporttasche gemäss einem Ausführungsbeispiel der Erfindung, die eine geschlossene (vollständig zusammengefaltete) Tasche (a), eine offene Tasche (b) und eine weitestmöglich geöffnete Tasche (c) zeigen;
- Fig. 4: ein Beispiel für eine platzsparende Lagerung nicht im Einsatz befindlicher Ta-schen;
- Fig. 5: ein Ausführungsbeispiel einer Transporttasche nach der Erfindung, die nach Art einer seitlich offenen Schlaufe ausgebildet ist;
- Fig. 6: zwei Ausführungsbeispiele einer Transporttasche nach der Erfindung, bei denen die Vorderseite (a) und Vorder- und Rückseite (b) mit einer schützen-den Deckschicht bedeckt sind;
- Fig. 7: in der Seitenansicht eine mit einem Paket gefüllte Tasche gemäss Fig. 3;
- Fig. 8: die Möglichkeit, eine einzelne Transporttasche gemäss Fig. 3 mit oder ohne Füllung an Wandhaken aufzuhängen;
- Fig. 9: in perspektivischer Ansicht ein weiteres Ausführungsbeispiel einer Transport-vorrichtung nach der Erfindung, die mit einer in einer Führungsschiene ge-führten Transportkette arbeitet; und
- Fig. 10: eine Transporttasche gemäss einem weiteren Ausführungsbeispiel der Erfin-dung mit aufklappbarem Boden zur vereinfachten Entleerung im geschlossen (a) und geöffneten (b) Zustand.

### WEGE ZUR AUSFÜHRUNG DER ERFINDUNG

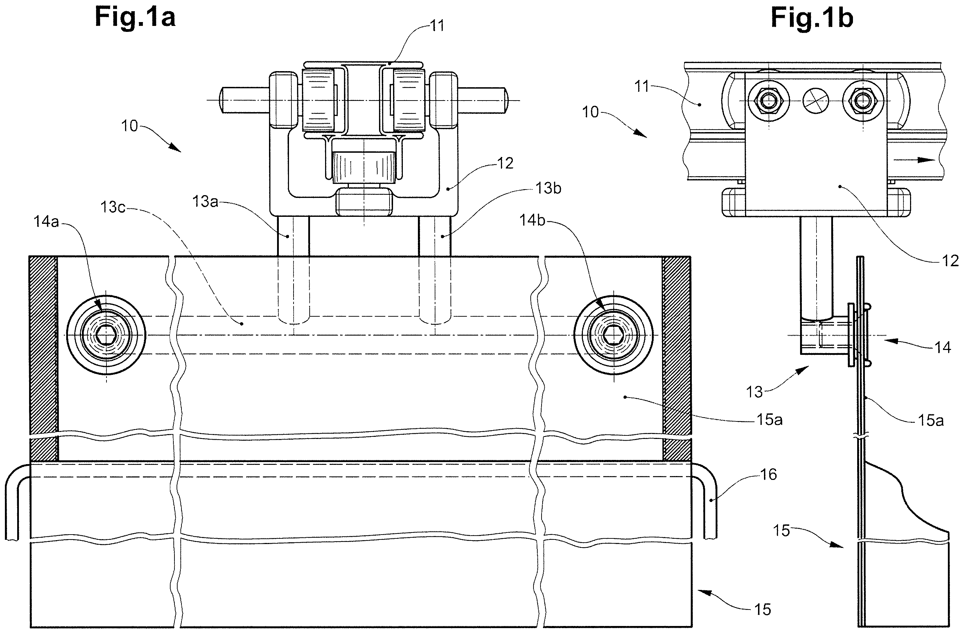

In Fig. 1 ist in zwei Seitenansichten (Fig. 1a und Fig. 1b) ein Ausführungsbeispiel einer Transportvorrichtung 10 nach der Erfindung mit einem in einer Laufschiene 11 geführten Laufwagen 12 wiedergegeben. An dem Laufwagen 12, der durch entsprechende Rollen horizontal und vertikal an der Laufschiene 11 geführt ist, ist unterwärts eine Befestigungsvorrichtung 13 angebracht, die zwei vertikale Verbindungsstangen 13a und 13b einen an deren Enden befestigten Querträger 13c umfasst.

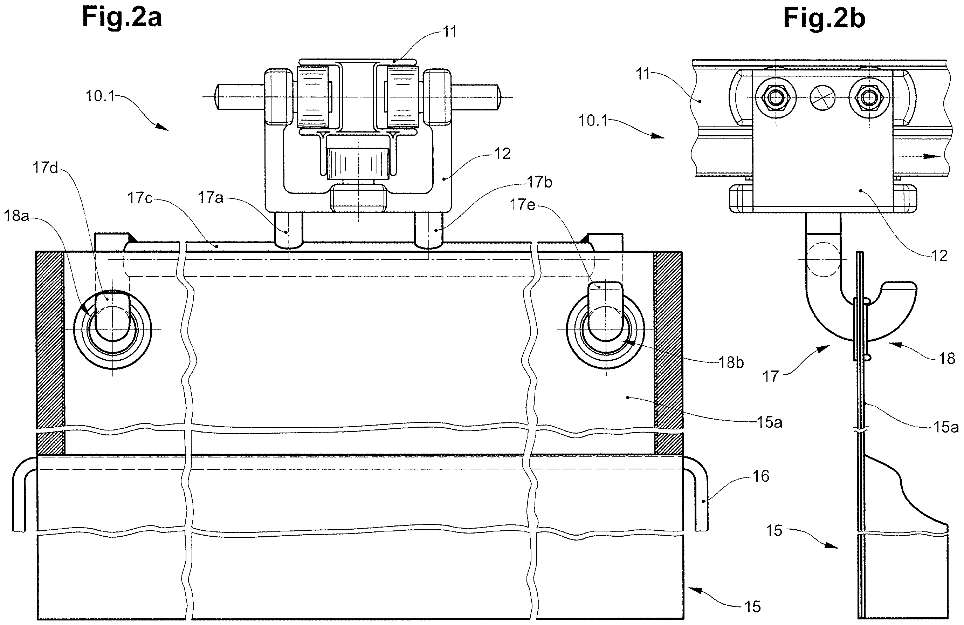

Eine Transporttasche 15 gemäss einem Ausführungsbeispiel der Erfindung weist oberhalb ihres Aufnahmeraums in der Verlängerung einer Rückwand einen Tragabschnitt 15a auf, in dem auf gleicher Höhe zwei horizontal voneinander beabstandete Öffnungen (Ösen 18a, 18b in Fig. 2) angeordnet sind. Die Transporttasche 15 ist vermittels dieser Öffnungen mit den abgewinkelten Enden des Querträgers 13c verschraubt (Verschraubungen 14 bzw. 14a und 14b) und so mit dem Laufwagen 12 fest verbunden. Zu erkennen ist in Fig. 1a weiterhin ein an der Transporttasche 15 angeordneter Öffnungsbügel 16, der - wie weiter unten näher erläutert werden wird - für die Funktionsweise der Transporttasche 15 eine massgebliche Rolle spielt.

Soll die Transporttasche 15 nicht am Laufwagen 12 fest angeschraubt, sondern abnehmbar eingehängt sein, kommt als Ausführungsbeispiel die Transportvorrichtung 10.1 der Fig. 2 in Betracht. Hier ist an dem sich entlang der Laufschiene 11 bewegenden Laufwagen 12 eine zur Befestigungsvorrichtung 13 aus Fig. 1 vergleichbare Befestigungsvorrichtung 17 angebracht, die wiederum zwei vertikale Verbindungsstangen 17a und 17b und einen an deren Enden befestigten Querträger 17c umfasst, An den Enden des Querträgers 17c sind in diesem Fall vertikal orientierte Traghaken 17d und 17e angeordnet, in welche die Transporttasche 15 mit den Ösen 18a und 18b des Tragabschnitts 15a abnehmbar eingehängt werden kann.

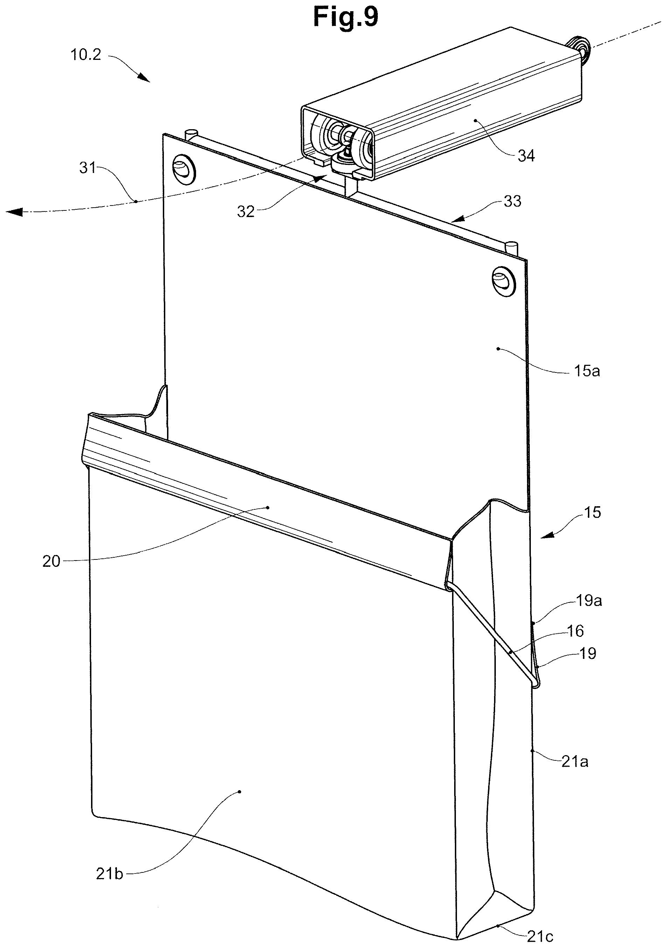

Eine vergleichbare Transportvorrichtung 10.2 mit einhängbarer Transporttasche 15 ist in Fig. 9 wiedergegeben. Hier läuft eine mit Rollen bestückte Transportkette 31 in einer weitgehend geschlossenen Führungsschiene 34. Die jeweils an einem Kettenglied 32 der Transportkette 31 angebrachte Befestigungsvorrichtung 33 ist an den Enden wiederum mit Haken zum Einhängen der Transporttasche 15 versehen.

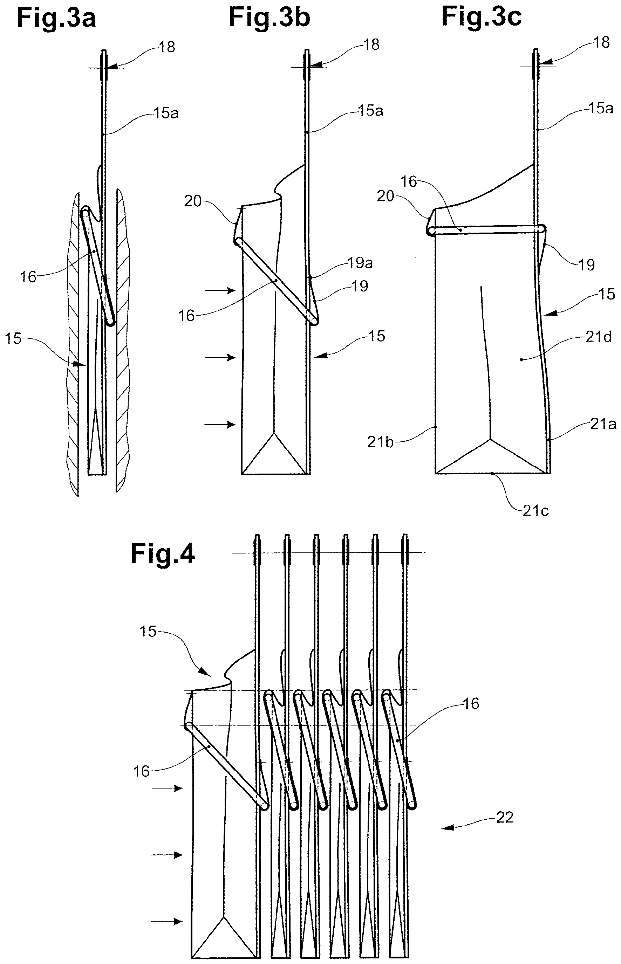

Die Funktion des Öffnungsbügels 16 an der Transporttasche 15 ist insbesondere aus der Fig. 3 ersichtlich, die in entsprechenden Teilfiguren (a) bis (c) verschiedene Phasen der Öffnung zeigt.

Wie aus Fig. 3(c) erkennbar ist, hat die Transporttasche 15 dieses Ausführungsbeispiels eine Rückwand 21a, die nach oben durch den Tragabschnitt 15a verlängert ist, eine Vorderwand 21b, Seitenwände 21d und einen Boden 21c. Ein rechteckig gebogener Öffnungsbügel 16, der die Transporttasche 15 aussen umfasst, ist in entsprechenden quer verlaufenden Tunnelschlaufen 19 und 20 an der Rückwand 21a und an der Vorderwand 21b mit grossem vertikalen Spiel verschwenkbar gelagert. Die an der Vorderwand 21b angeordnete vordere Tunnelschlaufe 20 ist in diesem Beispiel fest mit der Vorderwand 21b verbunden, so dass sie nicht umklappen kann. Im Unterschied dazu ist die an der Rückwand 21a angeordnete hintere Tunnelschlaufe 19 um eine horizontale Achse umklappbar an der Rückwand 21a angebracht, wie ein Vergleich der Fig. 3(c), in der die Tunnelschlaufe 19 nach oben geklappt ist, mit der Fig. 3(b) zeigt, in der die Tunnelschlaufe 19 nach unten geklappt ist. Die horizontale Klappachse wird durch einen Befestigungssaum 19a gebildet, mit welchem die Tunnelschlaufe 19 an der Rückwand 21a befestigt ist.

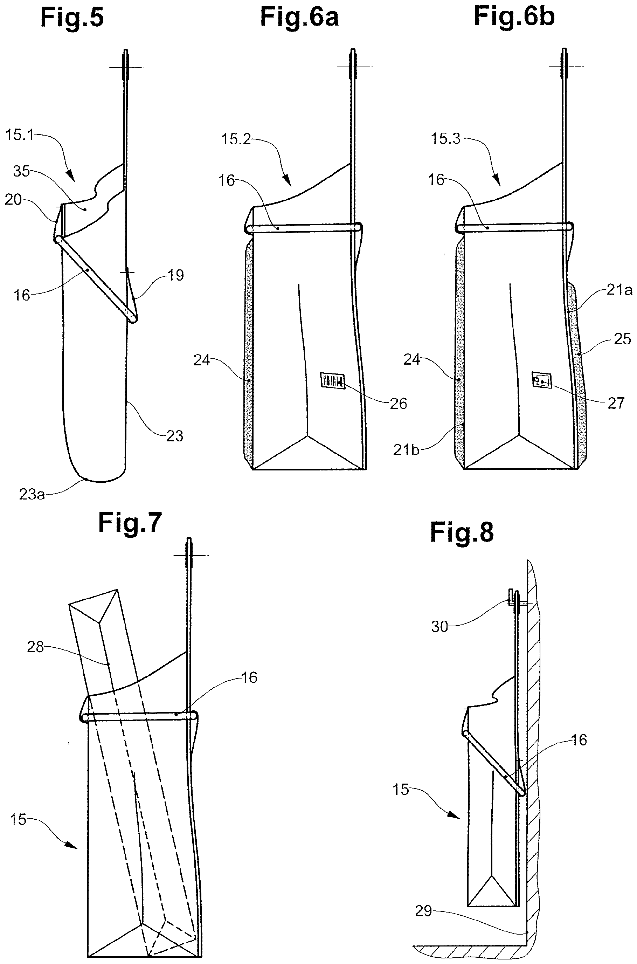

In Fig. 3(b) ist die Transporttasche 15 durch ein selbsttätiges, schwerkraftbedingtes Verschwenken des Öffnungsbügels 16 zum Befüllen oder Entleeren geöffnet. In diesem Zustand kann die Transporttasche 15 - wie in Fig. 7 beispielhaft gezeigt - leicht ein Paket 28 oder ein anderes Füllgut aufnehmen und dann transportieren. Der Boden 21c kann im Spezialfall auch nach unten aufklappbar oder anderweitig öffenbar ausgebildet sein, um eine gefüllte Transporttasche direkt nach unten zu entladen.

Der Öffnungsbügel 16 ist dabei z.B. von einer in Fig. 3(a) gezeigten, stark schräg angestellten zweiten Position in eine weniger schräg angestellte erste Position verschwenkt. Er kann von dieser ersten Position wieder in die zweite Position zurückbewegt werden, wenn gemäss den in Fig. 3(b) eingezeichneten Pfeilen eine Kraft auf die Vorderseite 21b der Transporttasche 15 ausgeübt wird.

In Fig. 3(c) ist die Transporttasche 15 z.B. durch ein in der Tasche befindliches Füllgut, weitestmöglich geöffnet, d.h. Rückwand 21a und Vorderwand 21b sind maximal voneinander entfernt. Der Boden 21c der Transporttasche 15 ist horizontal ausgebreitet, die einfaltbaren Seitenwände 21d sind ausgefaltet und die oben liegende Einfüllöffnung der Transporttasche 15 ist maximal geöffnet. Der Öffnungsbügel 16 liegt in diesem Zustand annähernd waagerecht. Dies wird dadurch ermöglicht, dass die hintere Tunnelschlaufe 19 umklappbar an der Rückwand 21a befestigt ist.

Wird nun gemäss Fig. 3(b) die Vorderwand 21b durch Druck von aussen (Pfeile) gegen die Rückwand 21a parallel verschoben, klappt der Öffnungsbügel 16 gegen die Schwerkraft in Uhrzeigerrichtung nach oben, bis er schliesslich die in Fig. 3(a) gezeigte, fast vertikale Stellung erreicht. In Fig. 3(a) ist dann die Transporttasche 15 zusammengefaltet und so auf ihre minimale Dicke reduziert. Sie passt dann - wie in Fig. 3(a) dargestellt - in einen engen Spalt zwischen zwei begrenzenden Wänden. Werden diese Begrenzungen wieder entfernt, klappt der Öffnungsbügel 16 aufgrund der Schwerkraft selbsttätig in die in Fig. 3(b) gezeigte Öffnungsstellung zurück und öffnet dabei die Transporttasche 15.

Mit Hilfe des Öffnungsbügels 16 und seiner Lagerung an Vorder- und Rückwand lässt sich somit erreichen, dass sich die Transporttasche 15 - wenn sonst keine weiteren Kräfte von aussen einwirken - selbsttätig öffnet, so dass ein Füllen oder Entleeren der Transportasche 15 auf besonders einfache Weise möglich ist.

Werden die (mehreren) Transporttaschen 15 einer Transportvorrichtung nicht benötigt, können sie gemäss Fig. 4 durch einfaches Zusammenschieben in einem (horizontalen) Taschenstapel 22 platzsparend gelagert bzw. vorgehalten werden. Die Öffnungsbügel 16 der einzelnen Transporttaschen 15 werden dabei in eine näherungsweise vertikale Stellung verschwenkt. Aufgrund der Anordnung und Lagerung der Öffnungsbügel 16 wird dabei eine gegenseitige Störung benachbarter Öffnungsbügel 16 vermieden.

Im einfachsten Fall kann bei der Transporttasche auf einen eigenständigen Boden und Seitenwände verzichtet werden. Dies ist beim Ausführungsbeispiel der Fig. 5 der Fall, wo die Transporttasche 15.1 in Form einer (seitlich offenen) Schlaufe 23 ausgebildet ist. An die Stelle des Bodens tritt hier ein Bodenabschnitt 23a, der durch das untere gerundete Ende der Schlaufe 23 gebildet wird. Da die Seiten offen sind, kann die Transporttasche 15.1 seitlich befüllt und/oder entleert werden. Damit in diesem Fall wegen der fehlenden Seitenwände der Öffnungsbügel 16 nicht selbständig ganz nach unten verschwenkt und damit die Transporttasche 15.1 schliesst, wird der Schwenkbereich dadurch begrenzt, dass im Bereich oberhalb des Öffnungsbügels 16 zwischen der Vorderwand und der Rückwand auf gegenüberliegenden Seiten die Wände miteinander verbindende Haltebänder 35 vorgesehen sind, welche sich beim Verschwenken des Öffnungsbügels 16 von der stark schräg angestellten zweiten Position in die weniger schräg angestellte erste Position straffen und den Schwenkbereich somit begrenzen.

Wenn sich mehrere (gefüllte) Transporttaschen der in Fig. 3 dargestellten Art in einer Transportvorrichtung 10 gemäss Fig. 1 unabhängig voneinander an einer Laufschiene 11 bewegen, kann es leicht vorkommen, dass sie an einem Staupunkt aufeinander auflaufen und so mit den Vorder- bzw. Rückwänden aufeinander prallen. Hierbei können, wenn das Füllgut ausreichend schwer ist, grössere Kräfte auftreten, die unter Umständen die Transporttaschen und/oder deren Füllgut beschädigen können. In einem solchen Fall ist es von Vorteil, wenn jede Transporttasche 15.2 bzw. 15.3 gemäss Fig. 6 (a) oder (b) auf der Vorderwand 21b und/oder der Rückwand 21a eine schützende, insbesondere stossdämpfende, Deckschicht 24 bzw. 25 aufweist. Eine solche Deckschicht kann aus einem flexiblen Schaumstoff, einem Gewebe oder Gewirk, einer Noppenfolie oder verteilten Luftpolstern, oder dgl. bestehen.

Weiterhin ist es denkbar, jede Transporttasche selbst und/oder deren jeweiligen Inhalt identifizierbar zu machen. Hierfür kann die Transporttasche 15.2 bzw. 15.3 gemäss Fig. 6 mit einem von aussen lesbaren Informationsträger 26 bzw. 27 ausgestattet sein. Hierbei kann es sich z.B. um einen optisch lesbaren Informationsträger wie ein Label mit Strichcode oder QR-Code oder dgl. handeln, oder um einen drahtlos elektronisch auslesbaren Informationsträger wie ein RFID. Ist der Informationsträger 26, 27 nur lesbar, kann mit ihm die jeweilige Transporttasche 15.2 bzw. 15.3 eindeutig identifiziert werden. Ist der Informationsträger ein- und auslesbar, können zusätzlich oder alternativ Informationen über den transportierten Tascheninhalt auf ihm gespeichert werden.

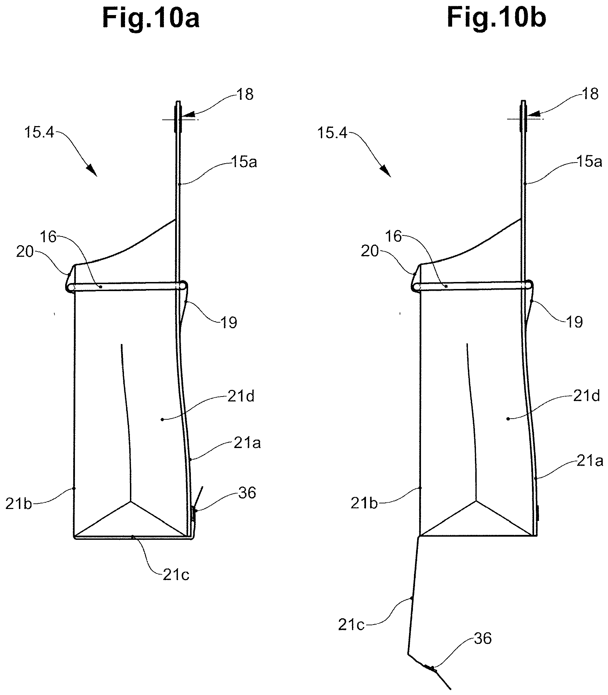

Auch ist es denkbar, gemäss Fig. 10 eine Transporttasche 15.4 bereitzustellen, die, insbesondere zum vereinfachten, möglicherweise automatisierten, Entleeren einen nach unten aufklappbaren Boden 21c aufweist. Fig. 10(a) zeigt die Transporttasche 15.4 im geschlossenen Zustand, Fig. 10(b) im geöffneten Zustand. Im gezeigten Ausführungsbeispiel ist der Boden 21c mit seiner vorderen Längskante an der unteren Kante der Vorderwand 21b verschwenkbar angelenkt. An der hinteren Längskante des Bodens 21c sind (eine oder längs der Kante verteilt mehrere) Verschlusslaschen 36 angebracht, die (mit einem entsprechenden Gegenstück an der Rückwand 21a) einen Klettverschluss bilden. Im geschlossenen Zustand (Fig. 10(a)) sind die Verschlusslaschen 36 gegen die Rückwand 21a geklappt und durch die Klettwirkung fixiert. Werden die Verschlusslaschen 36 von der Rückwand 21a gelöst, kann der Boden 21c nach unten aufgeklappt werden (Fig. 10(b)). Es versteht sich, dass die Verschlusslaschen umgekehrt auch an der Rückwand (21a) befestigt sein könnten. Es versteht sich weiterhin, dass der Boden 21c auch an der Unterkante der Rückwand 21a verschwenkbar angelenkt sein könnte. Abgesehen von dem in Fig. 10 dargestellten Ausführungsbeispiel ist generell eine Transporttasche von Vorteil, die nach unten geöffnet werden kann, und an der Mittel zum Verschliessen dieser Öffnung vorgesehen sind.

Schliesslich ist es denkbar, gemäss Fig. 8 eine einzelne Transporttasche 15 (mit oder ohne Füllung) an den Wandhaken 30 einer Wand 29 aufzuhängen, um die Tasche als solche oder deren Füllung separat zwischenzulagern.

## Patentansprüche

1. Transporttasche (15, 15.1, 15.2, 15.3, 15.4) für den Transport und/oder die Aufbewahrung von Gegenständen, umfassend eine Vorderwand (21b) und eine Rückwand (21a), die über einen Bodenabschnitt (21c; 23a) derart flexibel miteinander verbunden sind, dass sie zwischen einer ersten Konfiguration, in welcher sie eine oben offene und von oben befüllbare Tasche bilden, und einer zweiten Konfiguration, in welcher sie dicht nebeneinander liegen und eine zusammengefaltete Tasche bilden, hin und her bewegbar sind, wobei die Rückwand (21a) nach oben über die Höhe der Vorderwand (21b) hinaus mit einem Tragabschnitt (1 5a) zum Befestigen der Transporttasche (15, 15.1, 15.2, 15.3, 15.4) an einer Transportvorrichtung (10, 10.1, 10.2) verlängert ist, wobei Öffnungsmittel (16, 19, 20) vorgesehen sind, welche die Transporttasche (15, 15.1, 15.2, 15.3, 15.4) selbsttätig in die erste Konfiguration bringen und dort halten, und einen gewollten Wechsel von der ersten in die zweite Konfiguration zulassen, wobei die Öffnungsmittel (16, 19, 20) einen Öffnungsbügel (16) umfassen, welcher die Rückwand (21a) und die Vorderwand (21b) miteinander verbindet, **dadurch gekennzeichnet, dass** der Öffnungsbügel (16) jeweils an der Rückwand (21a) und an der Vorderwand (21b) derart verschwenkbar gelagert ist, dass er, von der zweiten Konfiguration ausgehend, durch sein Eigengewicht von einer schräg angestellten zweiten Position in eine weniger schräg angestellte erste Position verschwenkt wird und dabei die Transporttasche (15, 15.1, 15.2, 15.3, 15.4) in die erste Konfiguration bringt und dort hält.

2. Transporttasche nach Anspruch 1, **dadurch gekennzeichnet, dass** der Öffnungsbügel (16) aussen um die Transporttasche (15, 15.1, 15.2, 15.3, 15.4) herum geführt ist und an der Aussenseite der Rückwand (21a) und an der Aussenseite der Vorderwand (21b) jeweils in einer quer liegenden Tunnelschlaufe (19 bzw. 20) verschwenkbar gelagert ist.

3. Transporttasche nach Anspruch 2, **dadurch gekennzeichnet, dass** der Öffnungsbügel (16) als rechteckiger, formstabiler Metallbügel ausgebildet ist.

4. Transporttasche nach Anspruch 2, **dadurch gekennzeichnet, dass** der Öffnungsbügel (16) in den Tunnelschlaufen (19, 20) vertikal beweglich gelagert ist.

5. Transporttasche nach Anspruch 2, **dadurch gekennzeichnet, dass** eine der Tunnelschlaufen (19, 20) um eine horizontale Achse (19a) umklappbar ausgebildet ist.

6. Transporttasche nach Anspruch 1, **dadurch gekennzeichnet, dass** die Transporttasche (15, 15.2, 15.3, 15.4) durch Seitenwände (21d) seitlich geschlossen ist und als Bodenabschnitt einen Boden (21c) aufweist.

7. Transporttasche nach Anspruch 1, **dadurch gekennzeichnet, dass** die Transporttasche (15.4) nach unten geöffnet werden kann, und dass Mittel (36) zum Verschliessen dieser Öffnung vorgesehen sind.

8. Transporttasche nach Anspruch 7, **dadurch gekennzeichnet, dass** die Transporttasche (15.4) durch Seitenwände (21d) seitlich geschlossen ist und als Bodenabschnitt einen Boden (21c) aufweist, dass der Boden (21c) der Transporttasche (15.4) nach unten aufklappbar ausgebildet ist, und dass eine oder mehrere Verschlusslaschen (36) vorgesehen sind, mit welchen der Boden (21c) im geschlossenen Zustand fixiert werden kann.

9. Transporttasche nach Anspruch 1, **dadurch gekennzeichnet, dass** die Transporttasche (15.1) durch eine seitlich offene Schlaufe (23) gebildet wird, die im unteren Bereich einen Bodenabschnitt (23a) ausbildet.

10. Transporttasche nach Anspruch 9, **dadurch gekennzeichnet, dass** im Bereich oberhalb des Öffnungsbügels (16) auf gegenüberliegenden Seiten Haltebänder (35) vorgesehen sind, welche Vorder- und Rückwand der Schlaufe (23) verbinden und die Schwenkbewegung des Öffnungsbügels (16) begrenzen.

11. Transporttasche nach Anspruch 1, **dadurch gekennzeichnet, dass** die Transporttasche (15.2, 15.3) auf der Vorderwand (21b) und/oder der Rückwand (21a) eine schützende, insbesondere stossdämpfende, Deckschicht (24 bzw. 25) aufweist.

12. Transporttasche nach Anspruch 1, **dadurch gekennzeichnet, dass** die Transporttasche (15.2, 1 5.3) mit einem von aussen lesbaren Informationsträger (26 bzw. 27) ausgestattet ist.

13. Transporttasche nach Anspruch 1, **dadurch gekennzeichnet, dass** der Tragabschnitt (15a) der Transporttasche (15, 15.1, 15.2, 15.3, 15.4) mit wenigstens einer Befestigungsöffnung (18, 18a, 18b) versehen ist.

14. Transporttasche nach Anspruch 13, **dadurch gekennzeichnet, dass** als Befestigungsöffnungen zwei auf gleicher Höhe liegende, voneinander beabstandete Ösen (18a, 18b) vorgesehen sind.

15. Transporttasche nach Anspruch 1, **dadurch gekennzeichnet, dass** die Transporttasche (15, 15.1, 15.2, 15.3, 15.4) aus einem flexiblen, insbesondere gewebeverstärkten, Material gefertigt ist.

16. Transportvorrichtung (10, 10.1, 10.2) mit einer oder mehreren Transporttaschen (15, 15.1, 15.2, 15.3, 15.4) nach einem der Ansprüche 1 bis 15, **dadurch gekennzeichnet, dass** die Transporttasche(n) (15, 15.1, 15.2, 15.3, 15.4) mit dem Tragabschnitt (15a) an einem Laufwagen (12) in einer Laufschiene (11) oder an einer Transportkette (31) hängend entlang einem Transportweg bewegbar ist/sind.

17. Transportvorrichtung nach Anspruch 16, **dadurch gekennzeichnet, dass** die Transporttasche (15, 15.1, 15.2, 15.3, 15.4) an wenigstens zwei horizontal voneinander beabstandeten Punkten (18a, 18b) am Laufwagen (12) bzw. an der Transportkette (31) befestigt ist.

18. Transportvorrichtung nach Anspruch 16, **dadurch gekennzeichnet, dass** die Transporttasche (15, 15.1, 15.2, 15.3, 15.4) an den wenigstens zwei horizontal voneinander beabstandeten Punkten (18a, 18b) über eine Befestigungsvorrichtung (17, 17a, 17b, 1 7c, 1 7d, 1 7e; 33) am Laufwagen (12) bzw. an der Transportkette (31) abnehmbar befestigt ist.

## Claims

1. A transport bag (15, 15.1, 15.2, 15.3, 15.4) for the transport and/or storage of articles, comprising a front wall (21 b) and a rear wall (21a), which are flexibly connected to one another via a bottom section (21c; 23a) in such manner that they can be moved back and forth between a first configuration, in which they form a bag that is open at the top and can be filled from above, and a second configuration in which they lie close together and form a bag that is folded together, wherein the rear wall (21a) is extended upwards beyond the height of the front wall (21b) with a support section (15a) for fastening the transport bag (15, 15.1, 15.2, 15.3, 15.4) to a transport device (10, 10.1, 10.2), wherein opening means (16, 19, 20) are provided which automatically bring the transport bag (15, 15.1, 15.2, 15.3, 15.4) into the first configuration and hold it there, and allow a deliberate shift from the first to the second configuration, wherein the opening means (16, 19, 20) comprise an opening bracket (16) which connects the rear wall (21a) and the front wall (21b) to one another, **characterized in that** the opening bracket (16) is pivotably mounted on each of the rear wall (21a) and the front wall (21b) in such a manner that, starting from the second configuration, it is pivoted by its own weight from an inclined second position into a less inclined first position and thereby brings the transport bag (15, 15.1, 15.2, 15.3, 15.4) into the first configuration and keeps it there.

2. The transport bag according to claim 1, **characterized in that** the opening bracket (16) is guided on the outside around the transport bag (15, 15.1, 15.2, 15.3, 15.4) and is pivotably mounted in each case on the outside of the rear wall (21a) and on the outside of the front wall (21 b) in a transverse tunnel loop (19 or 20).

3. The transport bag according to claim 2, **characterized in that** the opening bracket (16) is formed as a rectangular, dimensionally stable metal bracket.

4. The transport bag according to claim 2, **characterized in that** the opening bracket (16) is mounted in the tunnel loops (19, 20) in a vertically movable manner.

5. The transport bag according to claim 2, **characterized in that** one of the tunnel loops (19, 20) is formed so as to be foldable about a horizontal axis (19a).

6. The transport bag according to claim 1, **characterized in that** the transport bag (15, 15.2, 15.3, 15.4) is closed laterally by side walls (21 d) and has a bottom (21 c) as a bottom section.

7. The transport bag according to claim 1, **characterized in that** the transport bag (15.4) can be opened downwards and that means (36) are provided for closing this opening.

8. The transport bag according to claim 7, **characterized in that** the transport bag (15.4) is laterally closed by side walls (21 d) and has a bottom (21c) as a bottom section, that the bottom (21c) of the transport bag (15.4) is formed to be hinged downwards, and that one or more closure flaps (36) are provided with which the bottom (21 c) can be fixed in the closed state.

9. The transport bag according to claim 1, **characterized in that** the transport bag (15.1) is formed by a laterally open loop (23) which forms a bottom section (23a) in the lower region.

10. The transport bag according to claim 9, **characterized in that** retaining straps (35) are provided on opposite sides in the region above the opening bracket (16), which connect the front and rear walls of the loop (23) and limit the pivoting movement of the opening bracket (16) .

11. The transport bag according to claim 1, **characterized in that** the transport bag (15.2, 15.3) has a protective, in particular shock-absorbing cover layer (24 or 25) on the front wall (21b) and/or the rear wall (21a).

12. The transport bag according to claim 1, **characterized in that** the transport bag (15.2, 15.3) is equipped with an externally readable information carrier (26 or 27).

13. The transport bag according to claim 1, **characterized in that** the support section (15a) of the transport bag (15, 15.1, 15.2, 15.3, 15.4) is provided with at least one fastening opening (18, 18a, 18b).

14. The transport bag according to claim 13, **characterized in that** two eyelets (18a, 18b) that are at the same height and are spaced apart from one another are provided as fastening openings.

15. The transport bag according to claim 1, **characterized in that** the transport bag (15, 15.1, 15.2, 15.3, 15.4) is made of a flexible, in particular fabric-reinforced material.

16. A transport device (10, 10.1, 10.2), having one or more transport bags (15, 15.1, 15.2, 15.3, 15.4) according to any one of claims 1 to 15, **characterized in that** the transport bag(s) (15, 15.1, 15.2, 15.3, 15.4), while suspended, is (are) movable along a transport path with the support section (15a) on a carriage (12) in a running rail (11) or on a transport chain (31).

17. The transport device according to claim 16, **characterized in that** the transport bag (15, 15.1, 15.2, 15.3, 15.4) is fastened to the carriage (12) or to the transport chain (31) at at least two points (18a, 18b) that are spaced apart horizontally from one another.

18. The transport device according to claim 16, **characterized in that** the transport bag (15, 15.1, 15.2, 15.3, 15.4) is removably fastened via a fastening device (17, 17a, 17b, 17c, 17d, 17e; 33) to the carriage (12) or to the transport chain (31) at at least two points (18a, 18b) that are horizontally spaced apart from one another.

## Revendications

1. Sac de transport (15,15.1,15.2,15.3,15.4) pour le transport et/ou la conservation d'objets, comprenant une paroi avant (21b) et une paroi arrière (21a), qui sont reliés entre elles de façon flexible par une section de fond (21c;23a) de telle sorte qu'elles peuvent être mobiles en va-et-vient entre une première configuration dans laquelle elles forment un sac ouvert en haut et remplissable par le haut et une deuxième configuration dans laquelle elles sont hermétiquement l'une près de l'autre et forment un sac replié, la paroi arrière (21a) étant prolongée vers le haut au-dessus de la hauteur de la paroi avant (21b) avec une section de support (15a) pour fixer le sac de transport (15,15.1,15.2,15.3,15.4) à un dispositif de transport (10,10.1,10.2), un moyen d'ouverture (16,19,20) étant prévu, lequel met et maintient ainsi automatiquement le sac de transport (15,15.1,15.2,15.3,15.4) dans la première configuration et permet un changement souhaité de la première à la deuxième configuration, les moyens d'ouverture (16,19,20) comprenant un cintre d'ouverture (16), lequel relie ensemble la paroi arrière (21a) à la paroi avant (21b), **caractérisé en ce que** le cintre d'ouverture (16) est logé pouvant pivoter respectivement sur la paroi arrière (21a) et sur la paroi avant (21b) de telle sorte qu'en partant de la deuxième configuration, il est pivoté par son propre poids d'une deuxième position disposée obliquement dans une première position disposée moins obliquement et met à cet effet et maintient ainsi le sac de transport ((15,15.1,15.2,15.3,15.4) dans la première configuration.

2. Sac de transport selon la revendication 1, **caractérisé en ce que** le cintre d'ouverture (16) est guidé extérieurement autour du sac de transport (15,15.1,15.2,15.3,15.4) et est logé pouvant pivoter respectivement sur le côté extérieur de la paroi arrière (21a) et sur le côté extérieur de la paroi avant (21b) dans une boucle de tunnel (19 ou 20) située transversalement.

3. Sac de transport selon la revendication 2, **caractérisé en ce que** le cintre d'ouverture (16) est constitué comme un cintre métallique rectangulaire stable de forme.

4. Sac de transport selon la revendication 2, **caractérisé en ce que** le cintre d'ouverture (16) est logé verticalement mobile dans les boucles de tunnel (19,20) .

5. Sac de transport selon la revendication 2, **caractérisé en ce qu'**une des boucles de tunnel (19,20) est constitué rabattable autour d'un axe horizontal (19a).

6. Sac de transport selon la revendication 1, **caractérisé en ce que** le sac de transport (15,15.1,15.2,15.3,15.4) est latéralement fermé par les parois latérales (21d) et comporte un fond (21c) en tant que section de fond

7. Sac de transport selon la revendication 1, **caractérisé en ce que** le sac de transport (15.4) peut être ouvert vers le bas et **en ce que** des moyens (36) sont prévus pour fermer cette ouverture.

8. Sac de transport selon la revendication 7, **caractérisé en ce que** le sac de transport (15.4) est latéralement fermé par les parois latérales (21d) et comporte un fond (21c) en tant que section de fond, **en ce que** le fond (21c) du sac de transport (15.4) est constitué pouvant être rabattu vers le bas et **en ce qu'**un ou plusieurs rabats de fermeture (36) sont prévus avec lesquels le fond (21c) peut être fixé à l'état fermé.

9. Sac de transport selon la revendication 1, **caractérisé en ce que** le sac de transport (15.1) est formé par une boucle latéralement ouverte (23) qui constitue une section de fond dans la zone inférieure.

10. Sac de transport selon la revendication 9, **caractérisé en ce que** dans la zone au-dessus du cintre d'ouverture (16) sur les côtés opposés des colliers de support (35) sont prévus, lesquels relient la paroi avant et la paroi arrière de la boucle (23) et limitent le mouvement de pivotement du cintre d'ouverture (16).

11. Sac de transport selon la revendication 1, **caractérisé en ce que** le sac de transport (15.2, 15.3) comporte sur la paroi avant (21b) et/ou la paroi arrière (21a) une couche de couverture (24 ou 25) protectrice, notamment amortissante.

12. Sac de transport selon la revendication 1, **caractérisé en ce que** le sac de transport (15.2,15.3) est équipé d'un support d'information extérieur lisible (26 ou 27) .

13. Sac de transport selon la revendication 1, **caractérisé en ce que** la section de support (15a) du sac de transport (15,15.1,15.2,15.3,15.4) est doté d'au moins une ouverture de fixation (18,18a,18b).

14. Sac de transport selon la revendication 13, **caractérisé en ce que** deux oeillets (18a,18b) distants l'un de l'autre situés à la même hauteur sont prévus en tant qu'ouvertures de fixation.

15. Sac de transport selon la revendication 1, **caractérisé en ce que** le sac de transport (15,15.1,15.2,15.3,15.4) est fabriqué dans un matériau souple, notamment renforcé de tissu.

16. Dispositif de transport (10,10.1,10.2) avec un ou plusieurs sacs de transport (15,15.1,15.2,15.3,15.4) selon l'une quelconque des revendications 1 à 15, **caractérisé en ce que** le(s) sac(s) de transport (15,15.1,15.2,15.3,15.4) est/sont mobiles le long d'une piste de transport avec la section de support (15a) sur un chariot (12) dans un rail de roulement (11) ou suspendue à une chaîne de transport (31).

17. Dispositif de transport selon la revendication 16, **caractérisé en ce que** le sac de transport (15,15.1,15.2,15.3,15.4) est fixé à au moins deux points distants l'un de l'autre horizontalement (18a,18b) sur un chariot (12) ou sur la chaîne de transport (31).

18. Dispositif de transport selon la revendication 16, **caractérisé en ce que** le sac de transport (15,15.1,15.2,15.3,15.4) est fixé pouvant être enlevé aux deux points distants l'une de l'autre horizontalement (18,18b) par le biais d'un dispositif de fixation (17,17a,17b,17c,17d,17e ;33) sur le chariot (12) ou sur la chaîne de transport (31).
